# EUROPEAN PATENT SPECIFICATION

(11) **EP 2 126 372 B1**
(45) Date of publication and mention of the grant of the patent: **29.02.2012**
(21) Application number: 08709593.1
(22) Date of filing: 05.03.2008
(51) Int. Cl.: F15B 13/04, F16K 11/10

(54) **HYDRAULIC ACTUATOR**
HYDRAULISCHES STELLGLIED
ACTIONNEUR HYDRAULIQUE

(30) Priority: 05.03.2007 GB 0704106; 07.03.2007 GB 0704397
(43) Date of publication of application: 02.12.2009
(73) Proprietor: Contour Aerospace Limited, Camberley Surrey GU15 3EX (GB)
(72) Inventor: HANKINSON, Christopher, Staffordshire ST10 2AY (GB); TEDSTONE, Sean, Francis, Gwent NP1 4NF (GB)
(74) Representative: Teesdale, Emily Catherine
(86) International application number: PCT/GB2008/000744
(87) International publication number: WO 2008/107671

(56) References cited:
- DE-U1- 8 904 569
- JP-A- 58 128 506
- US-A- 3 506 081
- US-A- 3 797 245
- US-A1- 2006 248 884
- US-B1- 6 519 939

## Description

The present invention relates to a hydraulic actuator, in particularly though not exclusively an electro-hydraulic actuator, and to a control valve therefor.

Electro-hydraulic actuators are finding increased application, due to better reliability that electromagnetic devices.

US Patent No 6,519,939 discloses one such electro-hydraulic actuator, having a complex manifold, described in its abstract in the following terms:

A hydraulic system manifold having a body, a counterbalancer in the body and a flow controller in the body is disclosed. The body has first and second pump ports, first and second cylinder ports, first and second compensator ports and first and second supply conduits in communication with the first and second pump ports, the counterbalancer and the flow controller. The counterbalancer is in communication with the first and second supply conduits and the cylinder ports, to communicate hydraulic fluid between the first and second supply conduits and the first and second cylinder ports while counterbalancing hydraulic fluid pressure in the first and second supply conduits. The flow controller is in communication with the first and second supply conduits and the compensator ports, to control the flow of hydraulic fluid between the compensator ports and the first and second supply conduits to supply and store hydraulic fluid in a volumetric compensator in communication with the compensator ports.

A control valve according to the state of the art is disclosed in US patent n° 3797245.

The object of the present invention is to provide an improved electro-hydraulic actuator and control valve therefor.

According to the invention, there is provided a control valve for a double-acting hydraulic actuating device to be actuated by a reversible, flow-and-return source of hydraulic pressure, the control valve comprising:
- a body having a bore,
- a shuttle movably mounted in the bore,
- two respective ports opening into the bore on either side of the shuttle for connection to respective reversible, flow-and-return points of the source,
- two respective non-return valves, having closure members resiliently biased into seats, and arranged on either side of the shuttle to allow pressure flow to a respective end inlet of the actuating device from the respective point of the source, on the source raising the pressure at the respective non-return valve above its opening threshold at which its closure member is moved hydraulically off its seat,
- springs on either side of the shuttle to centre it with respect to the non-return valves and
- closure-member movers extending in either direction from the shuttle for acting on the respective closure members to move them mechanically off their seats;
the springs being of such stiffness that the shuttle moves from its central position only after pressure has risen at one side above that required for hydraulic opening of this side non-return valve such that the shuttle then moves off-centre to move mechanically via the other-side, closure-member mover the closure member of the non-return valve on the other side, whereby flow connection is established on the one side of the shuttle and return connection is established on the other.

The shuttle valve being spring biased, the biasing holds the shuttle away from the other non-return valve until the one non-return valve has opened and allowed pressure to be applied to the piston and cylinder unit and to rise. The raised pressure acts on the shuttle to overcome its centring spring and move to open other non-return valve. Thus the flow non-return valve opens first. When the source is controlled to stop the flow, the pressure acting on the shuttle drops and allows the spring to centralise the shuttle, closing the return side before the flow side is closed. This results in the residual pressure acting on the shuttle at closure being maintained in the return side.

Since the non-return valves are spring biased to their closed position, they require appreciable pressure/force to open and they close with appreciable pressure retained in the actuating device.

The equilibrium of forces on the shuttle as it touches the closure member of the non-return valve, preferably a ball, is:
1. Acting on the flow side, the flow pressure times the shuttle piston area and
2. Acting on the return side, the source return pressure times the shuttle area, plus the effective ball area times actuating device return pressure, plus the centring spring force, namely its rate times the shuttle valve displacement, plus the ball spring force.
When the flow side force (1) (less any seal friction on the shuttle) exceeds the return side force (2), the shuttle will open the return ball valve. This may cause an increase in the source return pressure, resulting in an increase in the return side force and consequent urging of the shuttle away from the ball and a reduction of flow and a reduction in the return side pressure. An equilibrium results.

To further facilitate the equilibrium, in case of friction and/or disturbing factors such as load biasing of the actuating device in the direction in which its piston is being moved, the shuttle spring is preferably relatively strong in comparison with the non-return valve springs. In practice this can be achieved by making the shuttle spring with a higher spring constant than the non-return valve springs.

Preferably, the closure-member movers extend on the central axis of the bore and the non-return valves are also provided on the central axis, with their seats facing away from the shuttle.

Preferably, the non-return valves are ball valves, with springs arranged remote from the shuttle and urging their balls towards the shuttle.

Preferably, the shuttle springs are coil springs arranged to act co-axially of the shuttle, between the shuttle and parts of the non-return valves fitting respective ends of the bore.

Normally, the a control valve will be incorporated in an actuator built as unit including the double-acting hydraulic actuating device and the reversible flow-and-return source of hydraulic pressure. However, the source of hydraulic pressure can be remote.

Where the double-acting hydraulic actuating device, normally a piston and cylinder unit has a difference between the effective areas of its extend and return sides, due to the cross-sectional area of its piston rod (referred to below as the "piston rod effect"), accumulator means will be provided for accommodating the difference in hydraulic liquid displaced. Whilst the accumulator could be a diaphragm unit, in the preferred embodiment, the accumulator comprises an accumulation cylinder with a spring biased piston. Conveniently connection is provided to the accumulator via a common point of a back-to-back pair of non-return valves, respectively connected to the ports in the bore of the control valve on either side of the shuttle.

The back-to-back non-return valves are conveniently a pair of ball valves with a shuttle rod between them of such length that whichever of them is closed by flow pressure, the other is opened by shuttle rod.

Preferably oppositely directed non-return valves are provided between the flow and return lines from the source to the shuttle valve to provide by-pass flow routes in event of bottoming of the actuating device.

In the preferred embodiment, an over-ride control is included and has a pair of back-to-back, non-return valves arranged between the inlets of the two ends of the actuating device and means for mechanically opening these non-return valves to allow movement of the double-acting hydraulic actuating device independently of the reversible, flow-and-return source of hydraulic pressure.

Preferably, the means for mechanically opening these non-return valves comprises a central doubling acting cam and a pair of rods arranged to be acted on by the cam and act on and open the valves.

Further there is preferably provided a pair of front-to-front non-return valves parallel to the manual movement valves, to allow for thermal expansion of the hydraulic liquid and/or shock loading of the actuating device.

Whilst the source of hydraulic pressure can be a remotely pumped source, in the preferred embodiment, it is a locally, electrically driven gear pump.

To help understanding of the invention, a specific embodiment thereof will now be described by way of example and with reference to the accompanying drawings, in which:

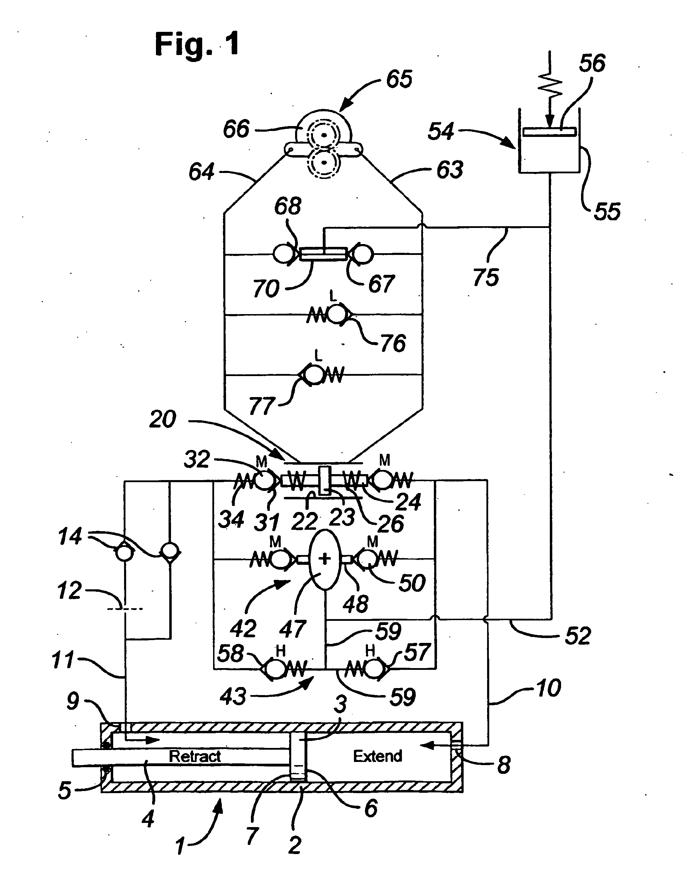

Figure 1 is a block dia gram of a hydraulic actuator in accordance with the invention;

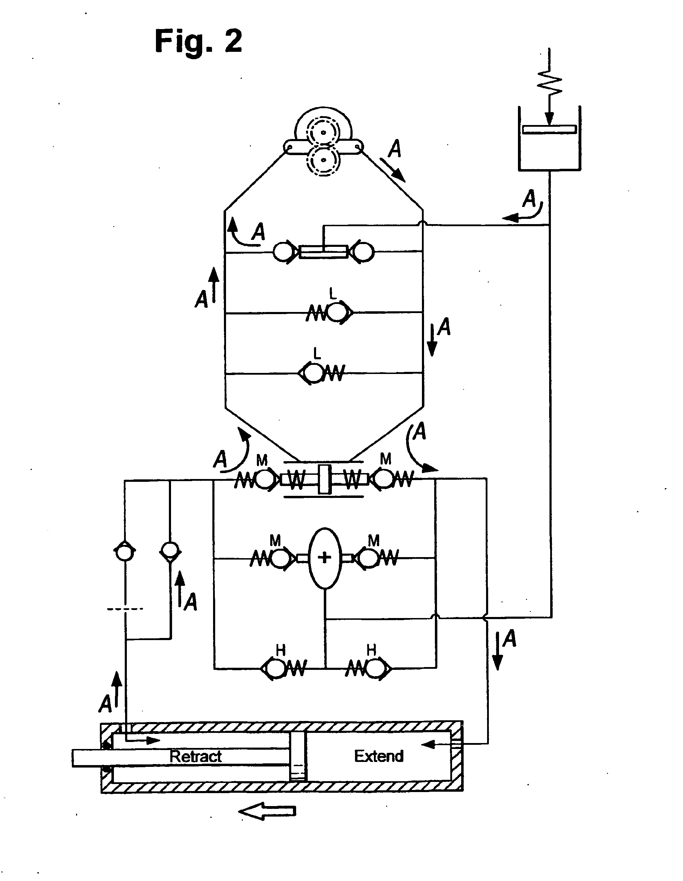

Figure 2 is a second view of the block diagram, showing by arrows A hydraulic flow direction for extension of the actuator;

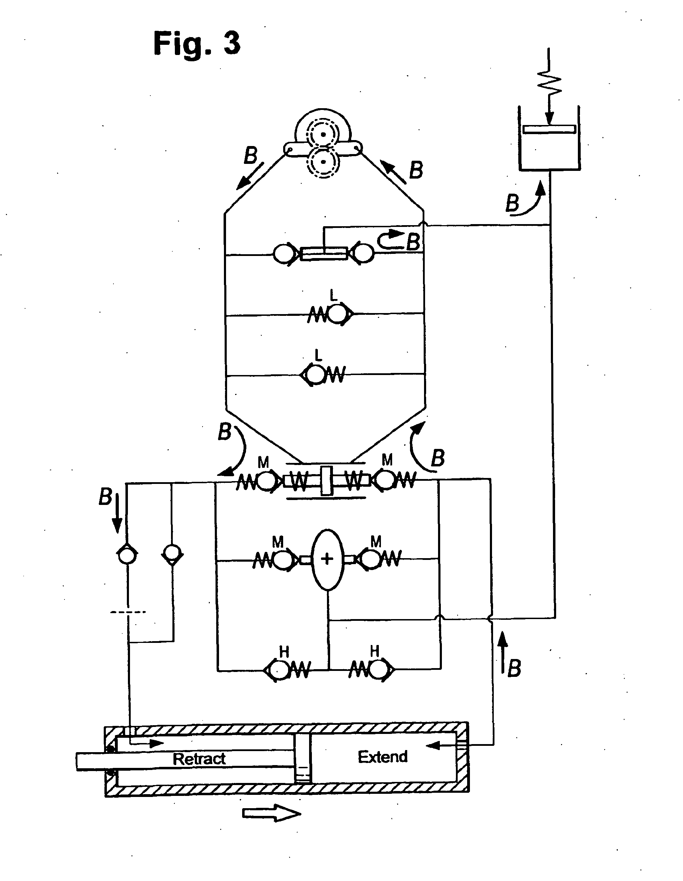

Figure 3 is a third view of the block diagram, showing by arrows B flow directions for retraction;

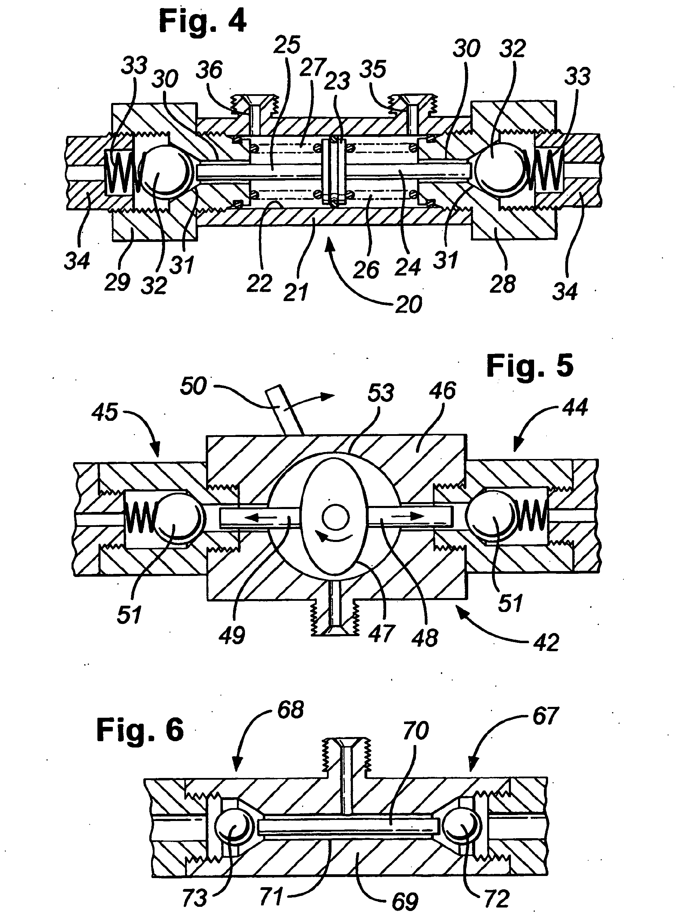

Figure 4 is a cross-sec tional view of a shuttle valve of the hydraulic actuator of Figure 1;
Figure 5 is a similar view of a manual release valve of the actuator; and
Figure 6 is a similar view of a piston rod effect valve of the actuator.

Referring to the drawings, an actuating device 1 has a cylinder 2 with a piston 3 connected to a rod 4. The rod's exit from the cylinder is sealed at 5, whereby the actuating device is double acting, with an extend side 6 of the piston and a retract side 7. The cylinder is provided with ports 8,9 at opposite ends for flow/return lines 10,11 to provide flow of hydraulic liquid to whichever side of the piston is to be pressurised for its movement and to provide return of hydraulic liquid from the other side. Due to the presence of the piston rod on the retract side, a lesser volume of liquid is displaced through the port 9 and line 11 than through port 8 and line 10 per unit of actuating device movement.

A filter 12 is provided in line 11, with a pair of non-return valves 14, arranged so that flow passes through the filter in one direction only.

The lines 10,11 pass to opposite ends of a shuttle valve 20. It has a body 21 with a bore 22 accommodating a double acting piston 23 having short rods 24,25 extending on either side. Each rod carries a centring spring 26,27 acting against its face of the shuttle piston and an end fitting 28,29 of the body. The springs are relatively stiff (in comparison with springs 33 mentioned below) and are held in constant opposed compression to centralise the shuttle. The fittings seal the bore, except that each has a central drilling 30 which can freely accommodate the rod on its side of the piston and allow hydraulic liquid flow at the same time. Outwards of the drilling, each fitting has a tapered bore 31 for receiving a non-return valve ball 32 normally held against the bore 31 by a spring 33 retained in the fitting by an end union 34 for its one of the lines 10,11. The bore has two ports 35,36 respectively close to the end fittings 28,29.

Branched from the lines 10, 11 are further lines 40,41 leading to a manual release unit 42. This has a pair of back-to-back, non-return valves 44,45, arranged similarly to the valves 31,32,33,34 at opposite ends of a body 46, having a centrally mounted elliptical cam 47 and rods 48,49 extending to valve balls 51. Turning of the elliptical cam by means of an external lever 50 urges the rods against the balls 51 of the valves 44,45, moving them off their seats and allowing flow of hydraulic fluid through the unit in response to manual movement of the piston rod 4. This flow will necessitate the need for exhaustion of an excess of liquid or influx of additional liquid due to the effect of the piston rod 4. This flow is via a line 52 connected into the central flow passage 53 of the manual release unit 42 and remotely connected to an accumulator 54, comprising a cylinder 55 with a spring biased piston 56.

A thermal expansion valve arrangement 43 comprises a pair of front-to-front arranged non-return valve 57,58 between the lines 40,41, with a central line 59 tee-ed into the line 52 to the accumulator. A high pressure - in comparison with normal operating pressures - is required to open the valves 57,58.

The body 21 of the shuttle valve has two ports 35,36 opening into the bore 22 adjacent the end fittings 28,29, to which ports are connected flow and return lines 63,64 from a reversible gear pump 65, selectively driven in either direction by an electric motor 66. Between the lines 63,64 are a pair of back-to-back non-return valves 67,68, arranged at opposite ends of a body 69 having a rod 70 in a central bore 71 of a length to keep one or other of the balls 72,73 of the valves off their seats. The central bore is connected to the accumulator via line 75 to provide for the piston rod effect in normal use. Also connected between the lines 63,64 are two spring biased non-return valves 76,77, one directed to one line and the other to the other. These provide bypass routes for pumped liquid in the event of the actuating device bottoming or otherwise being unable to move.

In normal operation, the pump is driven in the direction required for the desired movement of the actuator, as a whole. The springs in the bypass valves 76,77 are of a strength for the valves to be normally closed. Flow of hydraulic liquid is to one end of the shuttle valve. The pressure of the liquid lifts the valve in the respective end fitting 28,29. Pressure is applied to the actuating device and via its piston to the liquid in the respective line back to the other of the fittings. Until the valve in this fitting is opened no movement can occur. The pressure acts on the shuttle, moving it towards this valve, which it opens via its rod 24,25, the effective area of the balls 33 seating in their tapers 31 being less than that of the shuttle piston. Movement can then occur with the return of liquid back to the pump and piston rod effect flow to or from the accumulator via the line 75.

In the event of the actuator being loaded so that movement is resisted, the flow pressure from the pump increases to overcome the load. If the load is in the opposite direction, the piston will be urged to over-run the pump. However, this will result in a reduction in the pressure, which is causing the shuttle to open the return non-return valve. The latter then closes sufficiently to create a pressure drop across itself, which supports the actuator against run away. The pressure in the flow lines settles at a level to allow controlled movement. Provision of relatively strong centring springs 26,27 - in comparison with the valve springs 33 - ensures that the flow pressure and the centring spring forces predominate in determining the position of the shuttle and degree of opening of the return valve for controlled movement.

Whilst not immediately apparent from the drawings, the above described actuator, including the double-acting piston and cylinder unit, the pump and motor, the accumulator and the valves in a block are incorporated in a single integrated unit, controlled merely by application or not of voltage of polarity for its desired movement.

It should be noted that envisaged uses of the actuator are in the first instance in airliners, in particular for actuating seats and doors and in light aircraft for actuating landing gear. However, it is anticipated that the invention will find other uses.

## Claims

1. A control valve for a double-acting hydraulic actuating device to be actuated by a reversible, flow-and-return source of hydraulic pressure, the control valve comprising:
• a body having a bore,
• a shuttle movably mounted in the bore,
• two respective ports opening into the bore on either side of the shuttle for connection to respective reversible, flow-and-return points of the source,
• two respective non-return valves, having closure members resiliently biased into seats, and arranged on either side of the shuttle to allow pressure flow to a respective end inlet of the actuating device from the respective point of the source, on the source raising the pressure at the respective non-return valve above its opening threshold at which its closure member is moved hydraulically off its seat,
• springs on either side of the shuttle to centre it with respect to the non-return valves and
• closure-member movers extending in either direction from the shuttle for acting on the respective closure members to move them mechanically off their seats ;
the springs being of such stiffness that the shuttle moves from its central position only after pressure has risen at one side above that required for hydraulic opening of this side non-return valve such that the shuttle then moves off-centre to move mechanically via the other-side, closure-member mover the closure member of the non-return valve on the other side, whereby flow connection is established on the one side of the shuttle and return connection is established on the other.

2. A control valve as claimed in claim 1, wherein the closure-member movers extend on the central axis of the bore and the non-return valves are also provided on the central axis, with their seats facing away from the shuttle.

3. A control valve as claimed in claim 2, wherein the non-return valves are ball valves, with springs arranged remote from the shuttle and urging their balls towards the shuttle.

4. A control valve as claimed in claim 1, claim 2 or claim 3, wherein the shuttle springs are coil springs arranged to act co-axially of the shuttle, between the shuttle and parts of the non-return valves fitting respective ends of the bore.

5. An actuator including a control valve as claimed in any preceding claim, a double-acting hydraulic actuating device and a reversible flow-and-return source of hydraulic pressure.

6. An actuator as claimed in claim 5, wherein the double-acting hydraulic actuator is a piston and cylinder unit having a difference between the effective areas of its extend and return sides and including an accumulator for accommodating the difference in hydraulic liquid displaced.

7. An actuator as claimed in claim 6, wherein the accumulator is a diaphragm unit. _

8. An actuator as claimed in claim 6, wherein the accumulator is an accumulation cylinder with a spring biased piston.

9. An actuator as claimed in claim 6 or claim 7, wherein connection is provided to the accumulator via a common point of a back-to-back pair of non-return valves, respectively connected to the ports in the bore of the control valve on either side of the shuttle.

10. An actuator as claimed in claim 9, wherein the pair of back-to-back non-return valves are a pair of ball valves with a shuttle rod between them of such length that whichever of them is closed by flow pressure, the other is opened by shuttle rod.

11. An actuator as claimed in any one of claims 5 to 10, including a pair of oppositely directed non-return valves connected between the ports to provide by-pass flow routes in event of bottoming of the actuator.

12. An actuator as claimed in any one of claims 5 to 11, including an over-ride control having a pair of back-to-back, non-return valves arranged between the inlets of the two ends of the actuator and means for mechanically opening these non-return valves to allow movement of the double-acting hydraulic actuator independently of the reversible, flow-and-return source of hydraulic pressure.

13. An actuator as claimed in claim 12, wherein the means for mechanically opening these non-return valves comprises a central doubling acting cam and a pair of rods arranged to be acted on by the cam and act on and open the valves.

14. An actuator as claimed in claim 13 as appendent to any one of claims 6 to 9, wherein these non-return valves are connected between themselves to the accumulator.

15. An actuator as claimed in any one of claims 5 to 14, including a pair of front-to-front non-return valves arranged between the inlets of the two ends of the actuator, to allow for thermal expansion of the hydraulic liquid and/or shock loading of the actuator.

16. An actuator as claimed in claim 15 as appendent to any one of claims 6 to 9, wherein the front-to-front non-return valves are connected between themselves to the accumulator.

17. An actuator as claimed in any one of claims 5 to 16, wherein the source of hydraulic pressure is a remotely pumped and reversed source.

18. An actuator as claimed in any one of claims 5 to 17, wherein the source of hydraulic pressure is a local, electrically-driven, reversible gear pump.

19. An actuator as claimed in any one of claims 5 to 18, including a doubled in parallel section line from one of the control-valve, non-return valves to the respective actuator inlet, one parallel section having a filter and a non-return valve directed in one direction and the other a non-return valve directed in the other direction.

## Patentansprüche

1. Steuerventil für eine doppelt-wirkende hydraulische Betätigungsvorrichtung zur Betätigung durch eine reversible Quelle hydraulischen Drucks vom Fluss- und Rückfluss Typ, wobei das Steuerventil aufweist:
- einen Körper mit einer Bohrung,
- ein Schiffchen, das beweglich in der Bohrung angebracht ist,
- zwei jeweilige Öffnungen, die sich auf jeder Seite des Schiffchens zur Verbindung mit jeweiligen reversiblen Fluss- und Rückflusspunkten der Quelle in die Bohrung öffnen,
- zwei jeweilige Rückschlagventile, die elastisch in Sitze vorgespannte Verschlusselemente haben und auf jeder Seite des Schiffchens angeordnet sind, um einen Druckfluss zu einem jeweiligen Endeinlass der Betätigungsvorrichtung vom jeweiligen Punkt der Quelle zu erlauben, wenn die Quelle den Druck am jeweiligen Rückschlagventil über seinen Öffnungsschwellwert, bei dem das Verschlusselement hydraulisch aus seinem Sitz bewegt wird, erhöht, und
- Verschlusselement-Bewegungsvorrichtungen, die sich von dem Schiffchen aus in jede Richtung erstrecken, um auf das jeweilige Verschlusselement einzuwirken, um sie mechanisch aus ihren Sitzen zu bewegen;
**dadurch gekennzeichnet, dass** es auch Federn auf jeder Seite des Schiffchens aufweist, um es in Bezug auf die Rückschlagventile zu zentrieren,
wobei die Federn eine solche Steifigkeit aufweisen, dass sich das Schiffchen nur aus seiner Mittelposition bewegt, nachdem der Druck auf einer Seite über den Druck gestiegen ist, der zum hydraulischen Öffnen dieses Rückschlagventils notwendig ist, so dass sich das Schiffchen dann aus der Mitte bewegt, um über die Verschlusselement-Bewegungsvorrichtung auf der anderen Seite das Verschlusselement des Rückschlagventils auf der anderen Seite mechanisch zu bewegen, wodurch auf der einen Seite des Schiffchens eine Strömungsverbindung hergestellt wird und auf der anderen Seite eine Rückflussverbindung hergestellt wird.

2. Steuerventil nach Anspruch 1, wobei sich die Verschlusselement-Bewegungsvorrichtungen entlang der Mittelachse der Bohrung erstrecken und die Rückschlagventile auch auf der Mittelachse angeordnet sind, wobei ihre Sitze von dem Schiffchen abgewandt sind.

3. Steuerventil nach Anspruch 2, wobei die Rückschlagventile Kugelventile mit Federn, die entfernt von dem Schiffchen angeordnet sind und ihre Kugeln in Richtung des Schiffchens drücken, sind.

4. Steuerventil nach Anspruch 1, 2 oder 3, wobei die Schiffchenfedern Spiralfedern sind, die zwischen dem Schiffchen und Bereichen der Rückschlagventile, die in jeweilige Enden der Bohrung eingepasst sind, angeordnet sind, um koaxial auf das Schiffchen einzuwirken.

5. Aktuator mit einem Steuerventil nach einem der vorangehenden Ansprüche, einer doppelt-wirkenden hydraulischen Betätigungsvorrichtung und einer reversiblen Quelle hydraulischen Drucks vom Fluss- und Rückfluss Typ.

6. Aktuator nach Anspruch 5, wobei der doppelt-wirkende hydraulische Aktuator eine Kolben- und Zylindereinheit mit einer Differenz zwischen den effektiven Flächen ihrer Ausstreck- und Rückkehrseite ist und einen Sammler aufweist, um die Differenz der verschobenen Hydraulikflüssigkeit aufzunehmen.

7. Aktuator nach Anspruch 6, wobei der Sammler eine Membraneinheit ist.

8. Aktuator nach Anspruch 6, wobei der Sammler ein Sammelzylinder mit einem durch eine Feder vorgespannten Kolben ist.

9. Aktuator nach Anspruch 6 oder 7, wobei eine Verbindung zu dem Sammler über einen gemeinsamen Punkt eines Rückseite an Rückseite angeordneten Paares von Rückschlagventilen, die jeweils auf jeder Seite des Schiffchens mit den Öffnungen in der Bohrung des Steuerventils verbunden sind, bereitgestellt wird.

10. Aktuator nach Anspruch 9, wobei das Paar der Rückseite an Rückseite angeordneten Rückschlagventile ein Paar von Kugelventilen mit einer Schiffchenstange zwischen ihnen ist, die solch eine Länge hat, dass, wenn eines der Ventile durch Strömungsdruck geschlossen wird, das andere durch die Schiffchenstange geöffnet wird.

11. Aktuator nach einem der Ansprüche 5 bis 10, mit einem Paar entgegengesetzt ausgerichteter Rückschlagventile, die zwischen den Öffnungen angeschlossen sind, um für den Fall des Durchschlagens des Aktuators Bypass-Strömungsrouten bereitzustellen.

12. Aktuator nach einem der Ansprüche 5 bis 11, mit einer Überdrucksteuerung mit einem Paar von Rückseite an Rückseite angeordneten Rückschlagventilen, die zwischen den Einlässen der beiden Enden des Aktuators angeordnet sind, und Mitteln zum mechanischen Öffnen dieser Rückschlagventile, um eine Bewegung des doppelt-wirkenden hydraulischen Aktuators unabhängig von der reversiblen Quelle hydraulischen Drucks vom Fluss- und Rückfluss Typ zu ermöglichen.

13. Aktuator nach Anspruch 12, wobei das Mittel zum mechanischen Öffnen der Rückschlagventile einen zentralen doppelt-wirkenden Mitnehmer und ein Paar von Stangen aufweist, die angeordnet sind, um von dem Mitnehmer betätigt zu werden und um auf die Ventile einzuwirken und diese zu öffnen.

14. Aktuator nach Anspruch 13, insoweit er auf einen der Ansprüche 6 bis 9 zurückbezogen ist, wobei die Rückschlagventile zwischen sich mit dem Sammler verbunden sind.

15. Aktuator nach einem der Ansprüche 5 bis 14, mit einem Paar von frontseitig zueinander ausgerichteten Rückschlagventilen, die zwischen den Einlässen der beiden Enden des Aktuators angeordnet sind, um eine thermische Expansion der Hydraulikflüssigkeit und/oder Stoßbelastung des Aktuators zu ermöglichen.

16. Aktuator nach Anspruch 15, insoweit er auf einen der Ansprüche 6 bis 9 zurückbezogen ist, wobei die frontseitig zueinander ausgerichteten Rückschlagventile zwischen sich mit dem Sammler verbunden sind.

17. Aktuator nach einem der Ansprüche 5 bis 16, wobei die Quelle hydraulischen Drucks eine aus der Ferne pumpenbetriebene und in den Rückwärtsbetrieb gebrachte Quelle ist.

18. Aktuator nach einem der Ansprüche 5 bis 17, wobei die Quelle hydraulischen Drucks eine lokale, elektrisch angetriebene, reversible Zahnradpumpe ist.

19. Aktuator nach einem der Ansprüche 5 bis 18, mit einer doppelt mit parallelen Bereichen ausgebildeten Leitung von einem der Steuerventile, Rückschlagventile zum jeweiligen Aktuatoreinlass, wobei ein paralleler Bereich einen Filter und ein Rückschlagventil, das in einer Richtung ausgerichtet ist, und der andere Bereich ein Rückschlagventil, das in der anderen Richtung ausgerichtet ist, hat.

## Revendications

1. Soupape de commande pour un dispositif d'actionnement hydraulique à double effet destiné à être actionné par une source d'écoulement et de retour réversible de pression hydraulique, la soupape de commande comprenant :
un corps ayant un alésage,
un sélecteur monté de manière mobile dans l'alésage,
deux orifices respectifs débouchant dans l'alésage de chaque côté du sélecteur pour le raccordement aux points d'écoulement et de retour réversibles respectifs de la source,
deux soupapes de non-retour respectives, ayant des éléments de fermeture sollicités de manière élastique dans des sièges, et agencées de chaque côté du sélecteur pour permettre l'écoulement de pression vers une entrée d'extrémité respective du dispositif d'actionnement à partir du point respectif de la source, après que la source a fait monter la pression au niveau de la soupape de non-retour respective au-dessus de son seuil d'ouverture auquel son élément de fermeture est hydrauliquement éloigné de son siège,
des ressorts de chaque côté du sélecteur pour le centrer par rapport aux soupapes de non-retour, et
des dispositifs de déplacement d'élément de fermeture s'étendant dans chaque direction à partir du sélecteur pour agir sur les éléments de fermeture respectifs afin de les éloigner mécaniquement de leurs sièges ;
les ressorts ayant une rigidité telle que le sélecteur se déplace de sa position centrale uniquement après la montée de pression d'un côté au-dessus de ce qui est requis pour l'ouverture hydraulique de cette soupape de non-retour latérale de sorte le sélecteur se décentre ensuite pour déplacer mécaniquement, via le dispositif de déplacement d'élément de fermeture de l'autre côté, l'élément de fermeture de la soupape de non-retour de l'autre côté, moyennant quoi le raccordement d'écoulement est établi sur le premier côté du sélecteur et le raccordement de retour est établi de l'autre côté.

2. Soupape de commande selon la revendication 1, dans laquelle les dispositifs de déplacement d'élément de fermeture s'étendent sur l'axe central de l'alésage et les soupapes de non-retour sont également prévues sur l'axe central avec leurs sièges en face à distance du sélecteur.

3. Soupape de commande selon la revendication 2, dans laquelle les soupapes de non-retour sont des clapets à billes, avec des ressorts agencés à distance du sélecteur et poussant leurs billes vers le sélecteur.

4. Soupape de commande selon la revendication 1, la revendication 2 ou la revendication 3, dans laquelle les ressorts de sélecteur sont des ressorts hélicoïdaux pour agir de manière coaxiale par rapport au sélecteur entre le sélecteur et les parties des soupapes de non-retour, s'adaptant aux extrémités respectives de l'alésage.

5. Actionneur comprenant une soupape de commande selon l'une quelconque des revendications précédentes, un dispositif d'actionnement hydraulique à double effet et une source d'écoulement et de retour de pression hydraulique.

6. Actionneur selon la revendication 5, dans lequel l'actionneur hydraulique à double effet est une unité de piston et de cylindre ayant une différence entre les zones effectives de ses côtés d'extension et retour et comprenant un accumulateur pour accepter la différence du liquide hydraulique déplacé.

7. Actionneur selon la revendication 6, dans lequel l'accumulateur est une unité de diaphragme.

8. Actionneur selon la revendication 6, dans lequel l'accumulateur est un cylindre d'accumulation avec un piston à ressort.

9. Actionneur selon la revendication 6 ou la revendication 7, dans lequel le raccordement est prévu sur l'accumulateur via un point commun d'une paire de soupapes de non-retour dos à dos, respectivement raccordées aux orifices dans l'alésage de la soupape de commande de chaque côté du sélecteur.

10. Actionneur selon la revendication 9, dans lequel la paire de soupapes de non-retour dos à dos est une paire de clapets à billes avec une tige de sélecteur entre eux d'une longueur telle, que quelque soit celui d'entre eux qui est fermé par la pression d'écoulement, l'autre est ouvert par la tige de sélecteur.

11. Actionneur selon l'une quelconque des revendications 5 à 10, comprenant une paire de soupapes de non-retour dirigées de manière opposée raccordées entre les orifices pour fournir des acheminements d'écoulement de dérivation en cas de blocage de l'actionneur.

12. Actionneur selon l'une quelconque des revendications 5 à 11, comprenant une commande prioritaire ayant une paire de soupapes de non-retour dos à dos agencées entre les entrées des deux extrémités de l'actionneur et des moyens pour ouvrir mécaniquement ces soupapes de non-retour pour permettre le mouvement de l'actionneur hydraulique à double effet indépendamment de la source d'écoulement et de retour réversible de pression hydraulique.

13. Actionneur selon la revendication 12, dans lequel les moyens pour ouvrir mécaniquement ces soupapes de non-retour comprennent une came centrale à double effet et une paire de tiges agencées pour être actionnées par la came et agir sur et ouvrir les soupapes.

14. Actionneur selon la revendication 13 lorsqu'elle est jointe à l'une quelconque des revendications 6 à 9, dans lequel ces soupapes de non-retour sont raccordées, entre elles-mêmes, à l'accumulateur.

15. Actionneur selon l'une quelconque des revendications 5 à 14, comprenant une paire de soupapes anti-retour face à face agencées entre les entrées des deux extrémités de l'actionneur pour permettre la dilatation thermique du liquide hydraulique et/ou la charge dynamique de l'actionneur.

16. Actionneur selon la revendication 15 lorsqu'elle est jointe à l'une quelconque des revendications 6 à 9, dans lequel les soupapes de non-retour face à face sont raccordées, entre elles-mêmes, à l'accumulateur.

17. Actionneur selon l'une quelconque des revendications 5 à 16, dans lequel la source de pression hydraulique est une source pompée et inversée à distance.

18. Actionneur selon l'une quelconque des revendications 5 à 17, dans lequel la source de pression hydraulique est une pompe à engrenages locale électrique et reversible.

19. Actionneur selon l'une quelconque des revendications 5 à 18, comprenant une double ligne de section parallèle à partir de l'une des soupapes de non-retour de la soupape de commande jusqu'à l'entrée d'actionneur respective, une section parallèle ayant un filtre et une soupape de non-retour dirigée dans une direction et l'autre soupape de non-retour dirigée dans l'autre direction.
